# EUROPEAN PATENT SPECIFICATION

(11) **EP 1 237 296 B1**
(45) Date of publication and mention of the grant of the patent: **03.05.2006**
(21) Application number: 02004285.9
(22) Date of filing: 27.02.2002
(51) Int. Cl.: H04B 7/005

(54) **Mobile communication system, transmission power control method therefor, and base station used therefor**
Drahtloses Übertragungssystem, zugehöriges Verfahren zur Sendeleistungsregelung und zugehörige Basisstation
Système de communication mobile, procédé de commande de la puissance de transmission correspondant et station de base correspondante

(30) Priority: 28.02.2001 JP 2001053453
(43) Date of publication of application: 04.09.2002
(73) Proprietor: NEC CORPORATION, Tokyo (JP)
(72) Inventor: Hamabe, Kojiro, Minato-ku, Tokyo (JP)
(74) Representative: Vossius & Partner

(56) References cited:
- EP-A- 0 748 075
- EP-A- 0 886 387
- EP-A- 0 887 947
- US-A- 5 507 018
- US-A- 5 715 526
- US-B1- 6 181 919

## Description

The present invention relates to a mobile communication system, a transmission power control method for the mobile communication system, and base station used for the mobile communication system, and specifically relates to a transmission power control method for a base station in a mobile communication system including a base station, and a mobile station where both of or either one of an individual channel, and a shared channel shared with other mobile stations for transmitting data from the base station are set with the base station.

Multi media readiness has been in progress for handling large amount of still pictures and short motion pictures on mobile terminals (mobile stations) such as cellular phones recently. There is HSDPA (High Speed Downlink Packet Access) method as a high capacity/high speed data transmission method, and a data transmission method such as HS-PDSCH (High Speed-Physical Downlink Shared Channel) which increases only a transmission speed on a downlink (from a base station to a mobile station) is under consideration.

As described above, when a large amount of data are transmitted through a communication network from a base station to a mobile station, a high speed down link shared channel referred to HS-PDSCH (a dedicated downlink line) is used to transmit data divided into packets, and when it is necessary to simultaneously transmit large amount of data to multiple mobile stations, this high speed down link shared channel referred to HS-PDSCH is time-shared (time sharing) to share the one high speed channel.

A transmission power for the shared channel is set to constant to restrain an interference wave power influencing the other users in a transmission power setting method for the HS-PDSCH (high speed shared channel) from a base station in the conventional HSDPA.

In this way, while the transmission power for shared channel is set to constant to restrain the interference wave power influencing the other users in the conventional HSDPA, there is a problem that a fluctuation of a transmission power for another channel fluctuates the interference wave power on the other users when multiplexed with the channel.

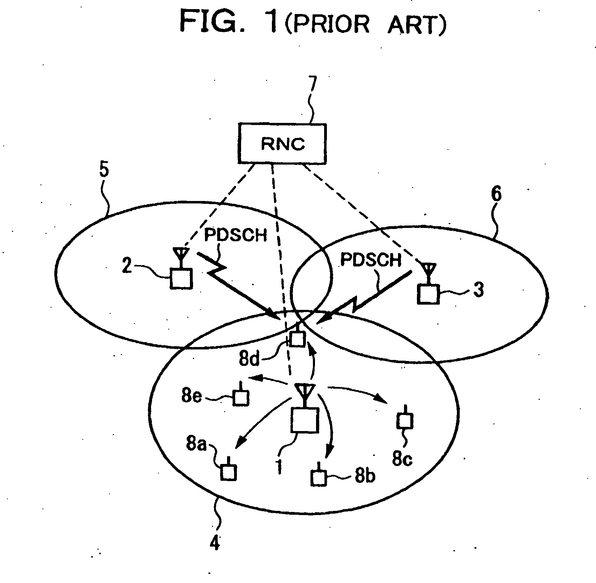

The following section details while referring to Fig. 1. Base stations 1 to 3 are base stations neighboring to one another, and the individual base stations 1 to 3 respectively have cells 4 to 6 as service areas in Fig. 1. These base stations 1 to 3 are connected with a communication network suppressed from the drawing through a base station control station (RNC: Radio Network Controller) 7. There exist multiple mobile stations inside the cells 4 to 6 as the service areas of individual base stations, and multiple mobile stations 8a to 8e exist only in the cell 4 of base station 1 in Fig. 1 for simplicity.

When CDMA (Code Division Multiplex Access) is used as a wireless access in this system, because the same frequency is shared among the neighboring cells 4 to 6, maintaining a transmission power of the HS-PDSCH constant maintains an interference wave power received from cells around constant.

However, an individual (physical) channel for an uplink/downlink referred to a DPCH (Dedicated Physical Channel) may be simultaneously set on a frequency carrier the same as that for setting the HS-PDSCH. This DPCH is an individual channel dedicated for the mobile station, and used for a service for transmitting information continuously at an approximately constant transmission rate such as a voice phone and a TV phone, and is a channel individually set between the base station 1 and the individual mobile stations 8a to 8e in Fig. 1.

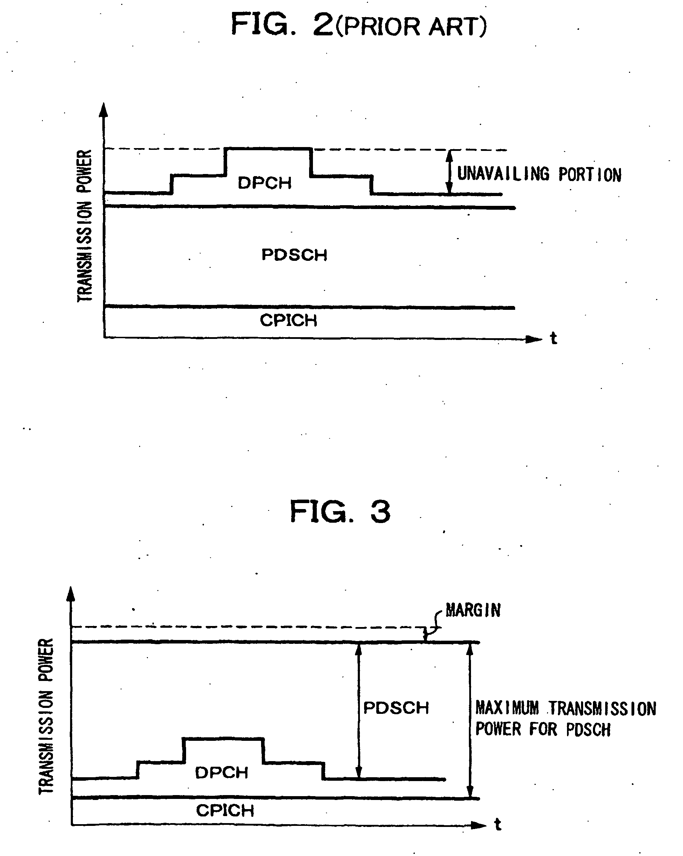

Because channel number set for the DPCH changes over time according to the number of mobile stations which receive a service, and a transmission power for the DPCH is controlled so as to maintain the communication quantity constant, the transmission power for DPCH for the downlinks from the base station to the individual mobile stations changes over time. Thus, a transmission power for the overall frequency carriers becomes an example shown in Fig. 2, and the total transmission power transmitted from the base station changes over time. CPICH means a common pilot channel common to all the mobile stations in Fig. 2, and the transmission power for it is constant as shown in Fig. 2.

In this way, because the total transmission power transmitted from the base station changes, the interference wave power received from the neighboring cells is not constant, and consequently, there is a problem that an average data transmission rate for the transmission using the HS-PDSCH is not constant.

There are a best-effort type service which increase the transmission rate in a possible range, and decreases a delay time, and a service quality assurance type service which assures the quality of a service such as an average transmission rate and the maximum delay time, and because the service quality assurance type service of them assures a user of a certain service quality, it has an advantage of limiting a wait timer for receiving and sending data to a certain period or less.

However, the average transmission rate is not constant because of the fluctuation of interference wave power received from the surrounding cells as described above, prediction precision for the wait time for transmitting and receiving data is low, the interference wave power received from the surrounding cells increases, and there is a problem that it is necessary to limit the number of users in the service quality assurance type service to low for assuring the service quality when the data transmission rate is low.

In addition, there is a certain upper limit for a total (a sum) of the transmission powers for HS-PDSCH and the entire DPCH as shown as a dotted line in Fig. 2. The indication includes the transmission power for CPICH in Fig. 2. A modulation/coding mode is switched according to a propagation path state to select a mode providing the highest transmission rate in a range satisfying an expected communication quality (such as a block error rate) in the HS-PDSCH. Namely, when the transmission path state is favorable, 64 QAM (Quadrature Amplitude Modulation), for example, is selected, when the transmission path state degrades, a low speed type such as 16 QAM is selected, and when the transmission path state further degrades, a lower speed type such as QPSK (Quadrature Phase Shift Keying) is selected.

However, the conventional method maintains the transmission power for HS-PDSCH constant regardless of the channel number set for the DPCH. As a result, it is necessary to reserve a transmission power for a possible number of the DPCH channels to be set, and to use the remaining power for transmission power for the HS-PDSCH, and the transmission power for HS-PDSCH is restrained to low.

As a result, a higher speed mode is not used for the modulation/coding mode accordingly, and there is a defect that the average data transmission rate decreases.

Even when the number of DPCH channels in use is low, because the transmission power for HS-PDSCH is constant, an unavailing portion is present as shown in Fig. 2. Further, because the transmission power for HS-PDSCH is constant, and the data transmission rate cannot be largely increased, the transmission rate cannot be largely increased, and the delay time cannot be largely decreased when the best effort type service is provided.

EP-A-0748075 discloses a mobile communication system according to the preamble of claim 1.

The object of the present invention is to provide a mobile communication system for providing a constant average data transmission rate transmitted using HS-PDSCH, a transmission power control method for the system, and a base station used for the system.

An alternative purpose of the present invention is to provide a mobile communication system for increasing the number of users for receiving a service quality assurance type service, a transmission power control method for the system, and a base station used for the system.

Another alternative purpose of the present invention is to provide a mobile communication system for increasing a transmission rate, and decreasing a delay time, a transmission power control method for the system, and a base station used for the system when a best effort type service is provided.

The above object is achieved with the features of the claims.

The following section describes an action of the present invention. The present invention controls such that the sum of transmission powers for all channels for transmitting from the base station to the mobile stations is approximately constant, and specifically controls the transmission power for high speed/high capacity shared channel (HS-PDSCH) such that the sum of transmission powers for the individual channels (DPCH) for individual mobile channels, and the shared channel is always approximately constant. As a result, the interference wave power from neighboring cells becomes constant, the average data transfer rate of shared channel becomes constant, prediction precision for a wait time for transmitting/receiving data increases, the lower limit for actual data transmission rate increases, and the number of users for the service quality assurance type service increases. Because when the number of individual channels in use is low, the transmission power for shared channel can increase, and the transmission rate increases and the time decreases when the best effort type service is provided.
Fig. 1 is a conceptual drawing for a mobile communication system;
Fig. 2 is a drawing for describing a downlink transmission power from a conventional base station;
Fig. 3 is a drawing for describing a principle of the present invention;
Fig. 4 is a flowchart for showing an operation of an embodiment.of the present invention;
Fig. 5 is a block diagram for showing an embodiment of a base station of the present invention;
Figs. 6A and 6B are format drawings of DPCH; and
Fig. 7 is a block diagram for showing an alternative embodiment of the base station of the present invention.

The following section describes preferred embodiments of the present invention while referring to drawings. Fig. 3 shows a conceptual drawing for describing a principle of the present invention, and the present invention controls such that a sum of downlink transmission powers for set channels for transmitting from a base station is always constant over time. CPICH is a common pilot channel in Fig. 3, and a transmission power therefor is always maintained constant as conventional cases (see Fig. 2). A transmission power of DPCH, which comprises individual channels for individual mobile stations, changes over time according to the number of mobile stations which receive a service as in the conventional cases (see Fig. 2).

The present invention differs from the conventional cases in that a transmission power for HS-PDSCH (abbreviated simply as PDSCH hereafter), which is a high speed/high capacity shared channel, is controlled according to a change of the transmission power for DPCH, and a sum of transmission powers for downlink channels from the base station is constant over time. It is also possible to set a constant margin (an allowance) for the sum of transmission powers shown as a broken line in Fig. 3. Namely, it is possible to set the maximum transmission power for PDSCH to a value indicated with the broken line in Fig. 3 while maintaining the margin.

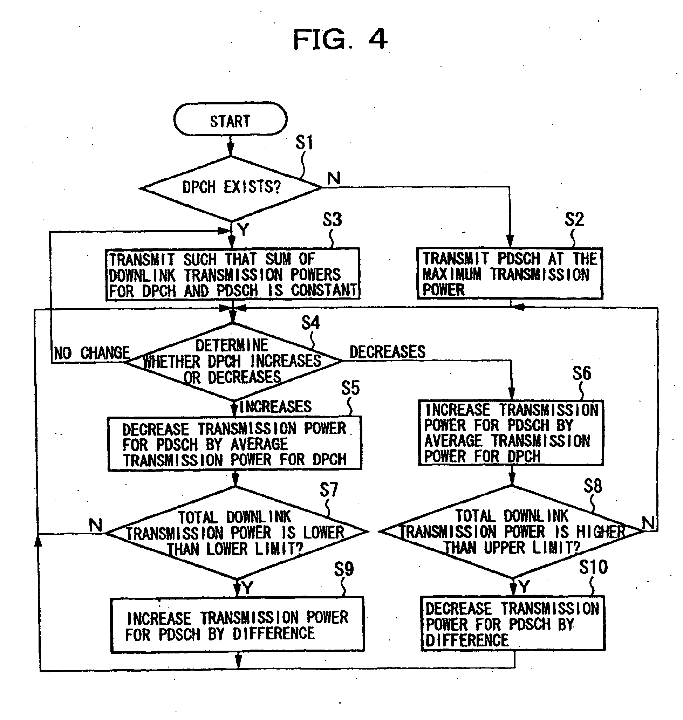

Fig. 4 is a flowchart for showing an operation of an embodiment of the present invention, and is an operation flow at the base station when the transmission power is controlled as shown in Fig. 3. First, it is determined whether the downlink DPCH setting exists or not (Step S1), and the PDSCH is transmitted at the maximum transmission power (see Fig. 3) if not (Step S2). If at least one channel is set for the DPCH, the transmission power for PDSCH is determined such that the sum of transmission powers for the DPCH and the PDSCH is constant (Step S3).

Then, it is determined whether the DPCH increases or decreases (Step S4), if the set channel number for DPCH increases, the transmission power for PDSCH decreases by a power corresponding to the increased channel number, and if the DPCH increases by (n) ((n) is an integer equal to or more than 1) channel, the transmission power for PDSCH is decreased by [(n) x (an average transmission power)] where the average transmission power for DPCH was measured, and determined empirically in advance (Step S5).

Inversely, if the set channel number for DPCH decreases, the transmission power for PDSCH increases by a power corresponding to the decreased channel number. In this case, if the decreased channel number for DPCH is (n), the transmission power for PDSCH increases by [(n) x (the average transmission power)] as well (Step S6).

A target range (an upper limit and a lower limit) for the total downlink transmission power is set, and as a result of the individual processes in Step S5 and Step S6, if the total downlink transmission power decreases below the lower limit, or increases over the upper limit (Step S7 and Step S8), the transmission power for PDSCH is controlled respectively to increase or decrease by the difference (the deficiency or the excess) (Step S9 and Step S10).

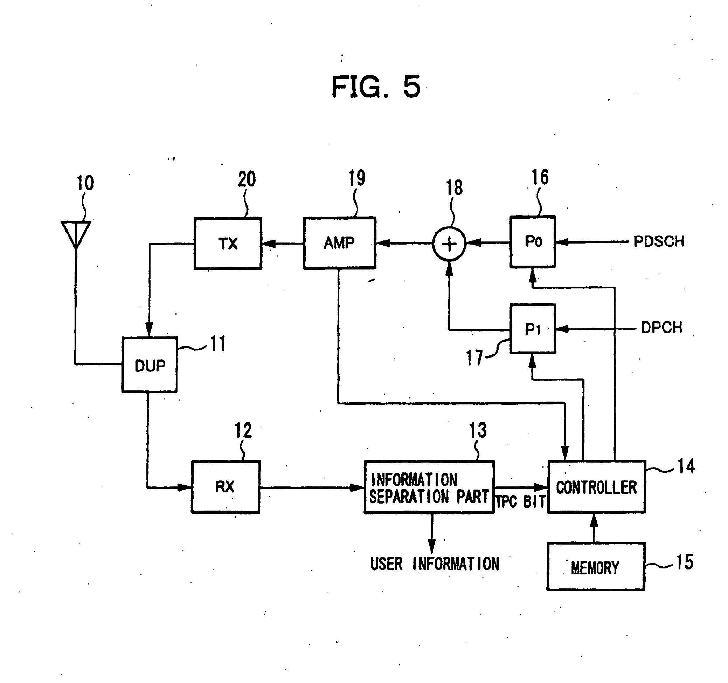

Fig. 5 is a block diagram for showing an example of the base station for realizing the operation of the present invention described above. A received signal from an antenna 10 is entered to the receiver (RX) through a duplexer (DUP) 11 for transmission and reception, and is supplied for an information separator 13 after processes such as demodulation in Fig. 5. The information separator 13 separates user information from different types of control information. A TPC (Transmission Power Control) bit from the control information is provided for a controller 14.

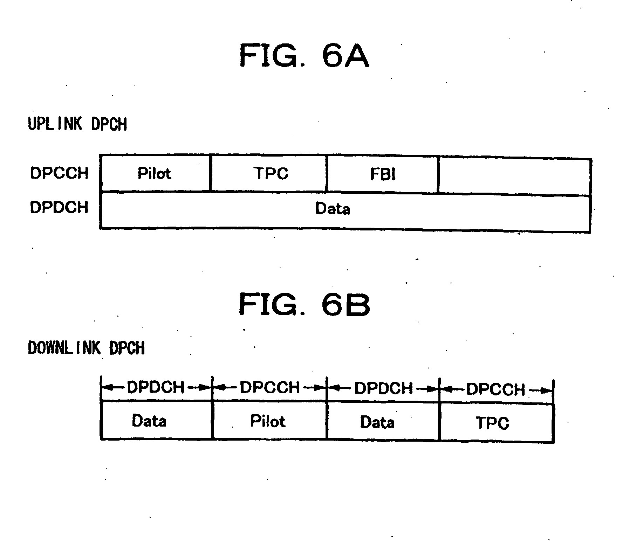

The following section describes the TPC bit. Formats for the DPCH are shown in Fig. 6A and Fig. 6B, and the downlink and the uplink have different formats. The uplink DPCH comprises DPCCH (Dedicated Physical Control Channel), and DPDCH (Dedicated Physical Data Channel), and they are quadrature-modulated with each other. The DPCCH includes a pilot signal (individual), the transmission power control bit (the TPC bit), feedback information (FBI), and communication data. The TPC bit is information for controlling the transmission power for downlink DPCH from the base station to the mobile station, and instructs the base station to increase/decrease the transmission power for downlink DPCH according to a measured result of measuring a receiving quality of the downlink DPCH. The TPC bit is extracted from the uplink DPCH, and is supplied for the controller 14.

The downlink DPCH comprises communication data, a pilot signal, and a TPC bit.

The transmission power of the PDSCH is multiplied by a coefficient P0 at a coefficient multiplier 16, the transmission power of the DPCH is multiplied by a coefficient P1 at a coefficient multiplier 17, and both of them are added at an adder 18. An amplifier 19 amplifies an output from this addition, and a transmitter 20 applies processes such as modulation to the output, and the output is transmitted through the DUP 11 and the antenna 10.

A value for the amplified power from the amplifier 19 is supplied for the controller 14, and indicates a current transmission power. The controller 14 determines the coefficient P1 according to the TPC bit for controlling the transmission power for DPCH, and determines the coefficient P0 according to the transmission power from the amplifier 19 for controlling the transmission power for PDSCH. This control form follows the flowchart shown in Fig. 4, and a CPU (a computer) reads and executes a control program stored in a dedicated memory 15 in advance for realizing this operation control.

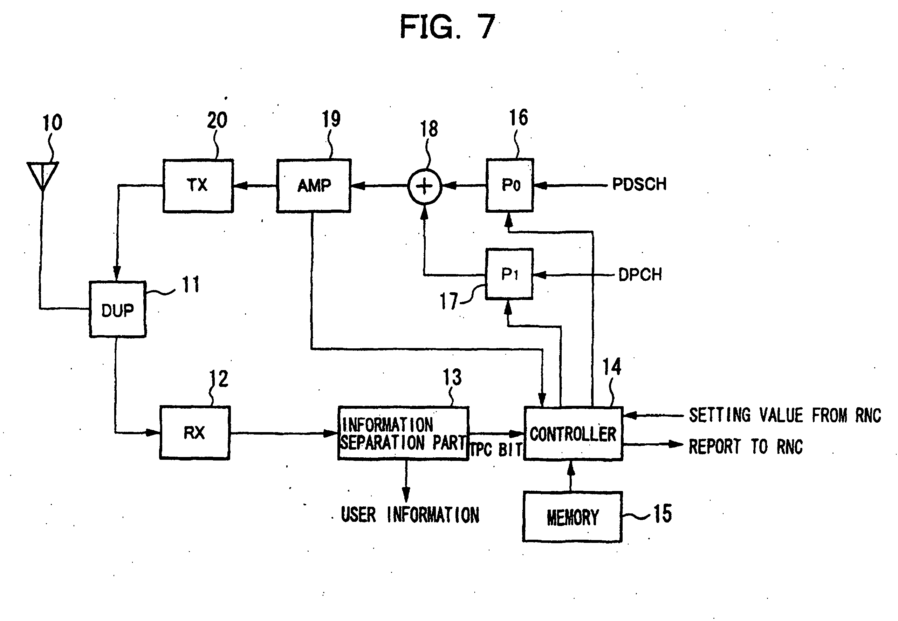

Fig. 7 is a block diagram for the base station of an alternative embodiment of the present invention, and shows parts equal to those in Fig. 5 with the same numerals. While the transmission power is controlled only in the base station in embodiment shown in Fig. 5, the base station control station (RNC) 7 shown in Fig. 1 as well as the base station control the transmission power in embodiment shown in Fig. 7.

Namely, the controller 14 reports the transmission power information from the amplifier 19 to the RNC 7 (see Fig. 1), and the RNC 7 which receives the report obtains the coefficient P0 for determining the transmission power for PDSCH based on this information, and notifies the controller 14 in base station of it.

As described above, because the entire transmission power for frequency carriers is constant in the present invention, an interference wave power received from neighboring cells is constant, when the transmission power for HS-PDSCH is set, an average data transfer rate which can be transmitted with this transmission power is approximately constant, and the prediction precision increases. Accumulating measured values such as a data transfer rate at 10W, and a data transfer rate at 12W enables the prediction. Thus, because a lower limit for a real data transfer rate increases, an effect that the number of users in the service quality assurance type service increases is provided.

Also, because it is not necessary to statically reserve a transmission power for the DPCH corresponding to a potential DPCH to be set, it is possible to increase the transmission power for HS-PDSCH when the usage of DPCH is low. Thus, an effect that the average data transfer rate increases is provided. When a best effort type service is provided, the transfer rate can increase, and a delay time can decrease.

## Claims

1. A mobile communication system comprising:
a base station (1, 2, 3); and
a mobile station (8a -8e) having an individual channel set to said base station and a shared channel set to said base station shared with other mobile stations for transmitting data from said base station; and
a transmission power control device (14) for controlling a sum of transmission powers from said base station to said mobile stations to approximately constant,
**characterized in that** if the sum of said transmission powers is larger than an upper limit, said transmission power control device decreases the transmission power for said shared channel by a difference between said sum and said upper limit.

2. A mobile communication system comprising:
a base station (1, 2, 3) ; and
a mobile station (8a -8e) having an individual channel set to said base station and a shared channel set to said base station shared with other mobile stations for transmitting data from said base station; and
a transmission power control device (14) for controlling a sum of transmission powers from said base station to said mobile stations to approximately constant,
**characterized in that** if the sum of said transmission powers is lower than a lower limit, said transmission power control device increases the transmission power for said shared channel by a difference between said sum and said lower limit.

3. The system according to claim 1 or 2, **characterized in that** said transmission power control device maintains a sum of transmission powers for said shared channel, and for said individual channels at said constant power.

4. The system according to claim 1, 2 or 3, **characterized in that** said transmission power control device sets the transmission power for said shared channel to said constant power when there exists no individual channel.

5. The system according to claim 1, 2, 3 or 4, **characterized in that** said transmission power control device respectively increases/decreases the transmission power for said shared channel according to an increased/decreased transmission power because of an increase/decrease of said individual channels.

6. The system according to claim 5, **characterized in that** said transmission power control device respectively increases/decreases the transmission power for said shared channel by an average transmission power of the individual channels for an increase/decrease of one individual channel.

7. The system according to any one of claims 1 to 6,
**characterized in that** said transmission power control device is provided in said base station.

8. The system according to any one of claims 1 to 7, further comprising a base station control station (7) for controlling said base station (1 to 3), wherein said base station reports information for said transmission power control to said base station control station, and said base station control station notifies setting information on the transmission power for said shared channel based on the reported information.

9. A transmission power control method for a base station of a mobile communication system including a base station (1 to 3), and a mobile station (8a to 8e) having an individual channel set to said base station and a shared channel set to said base station shared with other mobile stations for transmitting data from said base station,
said method comprising a transmission power controls step for controlling a sum of transmission powers from said base station to said mobile stations to approximately constant,
**characterized in that** if the sum of said transmission powers is larger than an upper limit, said transmission power control step decreases the transmission power for said shared channel by a difference between said sum and said upper limit.

10. A transmission power control method for a base station of a mobile communication system including a base station (1 to 3), and a mobile station (8a to 8e) having an individual channel set to said base station and a shared channel set to said base station shared with other mobile stations for transmitting data from said base station,
said method comprising a transmission power control step for controlling a sum of transmission powers from said base station to said mobile stations to approximately constant,
**characterized in that** if the sum of said transmission powers is lower than a lower limit, said transmission power control step increases the transmission power for said shared channel by a difference between said sum and said lower limit.

11. The method according to claim 9 or 10, **characterized in that** said transmission power control step maintains a sum of transmission powers for said shared channel, and for said individual channels at said constant power.

12. The method according to claim 9, 10 or 11, **characterized in that** said transmission power control step sets the transmission power for said shared channel to said constant power when there exists no individual channel.

13. The method according to claim 9, 10, 11 or 12, **characterized in that** said transmission power control step respectively increases/decreases the transmission power for said shared channel according to an increased/decreased transmission power because of an increase/decrease of said individual channels.

14. The method according to claim 13, **characterized in that** said transmission power control step respectively increases/decreases the transmission power for said shared channel by an average transmission power of the individual channels for an increase/decrease of one individual channel.

15. The method according to any one of claims 9 to 14, **characterized in that** said transmission power control step is conducted in said base station.

16. The method according to any one of claims 9 to 15,
**characterized in that** the mobile communication system further comprises a base station control station (7) for controlling said base station, said method further comprising the steps of:
reporting information for said transmission power control to said base station control station in said base station;
notifying setting information on the transmission power for said shared channel based on the reported information in said base station control station; and
conducting said transmission power control according to this notified information in said base station.

17. A base station (1 to 3) for setting an individual channel with a mobile station (8a to 8e) and a shared channel shared with other mobile stations for transmitting data from the mobile station, **characterized by** comprising/:
a transmission power control device (14) for controlling a sum of said transmission powers to said mobile stations to approximately constant, **characterized in that** if the sum of said transmission powers is larger than an upper limit, said transmission power control device decreases the transmission power for said shared channel by a difference between said sum and said upper limit.

18. A base station (1 to 3) for setting an individual channel with a mobile station (8a to 8e) and a shared channel shared with other mobile stations for transmitting data from the mobile station, **characterized by** comprising/:
a transmission power control device (14) for controlling a sum of said transmission powers to said mobile stations to approximately constant, **characterized in that** if the sum of said transmission powers is lower than a lower limit, said transmission power control device increases the transmission power for said shared channel by a difference between said sum and the lower limit.

19. The base station according to claim 17 or 18,
**characterized in that** said transmission power control device maintains a sum of transmission powers for said shared channel, and for said individual channels at said constant power.

20. The base station according to claim 17, 18 or 19, **characterized in that** said transmission power control device sets the transmission power for said shared channel to said constant power when there exists no individual channel.

21. The base station according to claim 17, 18, 19 or 20, **characterized in that** said transmission power control device respectively increases/decreases the transmission power for said shared channel according to an increased/decreased transmission power because of an increase/decrease of said individual channels.

22. The base station according to claim 21, **characterized in that** said transmission power control device respectively increases/decreases the transmission power for said shared channel by an average transmission power of the individual channels for an increase/decrease of one individual channel.

23. A program for making a computer execute a process for a transmission power control method according to any one of claims 9 to 14.

## Patentansprüche

1. Mobilkommunikationssystem mit:
einer Basisstation (1, 2, 3); und
einer Mobilstation (8a - 8e) mit einem individuellen Kanal, der auf die Basisstation eingestellt ist, und mit einem gemeinsamen Kanal, der auf die Basisstation eingestellt ist und gemeinsam mit anderen Mobilstationen genutzt wird, zum Übertragen von Daten von der Basisstation; und
einer Sendeleistungsregelungsvorrichtung (14) zum Regeln einer Summe von Sendeleistungen für Übertragungen von der Basisstation zu den Mobilstationen auf einen im wesentlichen konstanten Leistungswert;
**dadurch gekennzeichnet, dass**
die Sendeleistungsregelungsvorrichtung, wenn die Summe der Sendeleistungen größer ist als ein oberer Grenzwert, die Sendeleistung für den gemeinsamen Kanal um eine Differenz zwischen der Summe und dem oberen Grenzwert vermindert.

2. Mobilkommunikationssystem mit:
einer Basisstation (1, 2, 3); und
einer Mobilstation (8a - 8e) mit einem auf die Basisstation eingestellten individuellen Kanal und mit einem gemeinsamen Kanal, der auf die Basisstation eingestellt und mit anderen Mobilstationen gemeinsam genutzt wird, zum Übertragen von Daten von der Basisstation; und
einer Sendeleistungsregelungsvorrichtung (14) zum Regeln einer Summe von Sendeleistungen für Übertragungen von der Basisstation zu den Mobilstationen auf einen konstanten Leistungswert, **dadurch gekennzeichnet, dass**
die Sendeleistungsregelungsvorrichtung, wenn die Summe der Sendeleistungen kleiner ist als ein unterer Grenzwert, die Sendeleistung für den gemeinsamen Kanal um eine Differenz zwischen der Summe und dem unteren Grenzwert erhöht.

3. System nach Anspruch 1 oder 2, **dadurch gekennzeichnet, dass** die Sendeleistungsregelungsvorrichtung eine Summe der Sendeleistungen für den gemeinsamen Kanal und die individuellen Kanäle bei dem konstanten Leistungswert hält.

4. System nach Anspruch 1, 2 oder 3, **dadurch gekennzeichnet, dass** die Sendeleistungsregelungsvorrichtung die Sendeleistung für den gemeinsamen Kanal auf den konstanten Leistungswert setzt, wenn kein individueller Kanal vorhanden ist.

5. System nach Anspruch 1, 2, 3 oder 4, **dadurch gekennzeichnet, dass** die Sendeleistungsregelungsvorrichtung die Sendeleistung für den gemeinsamen Kanal gemäß einer erhöhten/verminderten Sendeleistung, die aufgrund einer Erhöhung/Verminderung der Anzahl der individuellen Kanäle verursacht wird, entsprechend erhöht/vermindert.

6. System nach Anspruch 5, **dadurch gekennzeichnet, dass** die Sendeleistungsregelungsvorrichtung die Sendeleistung für den gemeinsamen Kanal gemäß einer Erhöhung/Verminderung der Anzahl individueller Kanäle um eine mittlere Sendeleistung der individuellen Kanäle erhöht/vermindert.

7. System nach einem der Ansprüche 1 bis 6, **dadurch gekennzeichnet, dass** die Sendeleistungsregelungsvorrichtung in der Basisstation angeordnet ist.

8. System nach einem der Ansprüche 1 bis 7, ferner mit einer Basisstationssteuerungsstation (7) zum Steuern der Basisstation (1 bis 3), wobei die Basisstation der Basisstationssteuerungsstation Information für die Sendeleistungsregelung zuführt, und wobei die Basisstationssteuerungsstation Setzinformation über die Sendeleistung für den gemeinsamen Kanal basierend auf der zugeführten Information bereitstellt.

9. Sendeleistungsregelungsverfahren für eine Basisstation in einem Mobilkommunikationssystem mit einer Basisstation (1 bis 3) und einer Mobilstation (8a bis 8e) mit einem individuellen Kanal, der auf die Basisstation eingestellt ist, und mit einem gemeinsamen Kanal, der auf die Basisstation eingestellt ist und mit anderen Mobilstationen gemeinsam genutzt wird, zum Übertragen von Daten von der Basisstation;
wobei das Verfahren aufweist:
einen Sendeleistungsregelungsschritt zum Regeln einer Summe von Sendeleistungen für Übertragungen von der Basisstation zu den Mobilstationen auf einen im wesentlichen konstanten Leistungswert;
**dadurch gekennzeichnet, dass**
die Sendeleistung für den gemeinsamen Kanal im Sendeleistungsregelungsschritt, wenn die Summe der Sendeleistungen größer ist als ein oberer Grenzwert, um eine Differenz zwischen der Summe und dem oberen Grenzwert vermindert wird.

10. Sendeleistungsregelungsverfahren für eine Basisstation in einem Mobilkommunikationssystem mit einer Basisstation (1 bis 3) und einer Mobilstation (8a bis 8e) mit einem individuellen Kanal, der auf die Basisstation eingestellt ist, und mit einem gemeinsamen Kanal, der auf die Basisstation eingestellt ist und mit anderen Mobilstationen gemeinsam genutzt wird, zum Übertragen von Daten von der Basisstation;
wobei das Verfahren aufweist:
einen Sendeleistungsregelungsschritt zum Regeln einer Summe von Sendeleistungen für Übertragungen von der Basisstation zu den Mobilstationen auf einen im wesentlichen konstanten Leistungswert;
**dadurch gekennzeichnet, dass**
die Sendeleistung für den gemeinsamen Kanal im Sendeleistungsregelungsschritt, wenn die Summe der Sendeleistungen kleiner ist als ein unterer Grenzwert, um eine Differenz zwischen der Summe und dem unteren Grenzwert erhöht wird.

11. Verfahren nach Anspruch 9 oder 10, **dadurch gekennzeichnet, dass** eine Summe der Sendeleistungen für den gemeinsamen Kanal und für die individuellen Kanäle im Sendeleistungsregelungsschritt auf einem konstanten Leistungswert gehalten wird.

12. Verfahren nach Anspruch 9, 10 oder 11, **dadurch gekennzeichnet, dass** die Sendeleistung für den gemeinsamen Kanal im Sendeleistungsregelungsschritt auf den konstanten Leistungswert gesetzt wird, wenn kein individueller Kanal vorhanden ist.

13. Verfahren nach Anspruch 9, 10, 11 oder 12, **dadurch gekennzeichnet, dass** die Sendeleistung für den gemeinsamen Kanal im Sendeleistungsregelungsschritt gemäß einer Erhöhung/Verminderung der Sendeleistung, die aufgrund einer Erhöhung/Verminderung der Anzahl individueller Kanäle verursacht wird, entsprechend erhöht/vermindert wird.

14. Verfahren nach Anspruch 13, **dadurch gekennzeichnet, dass** im Sendeleistungsregelungsschritt die Sendeleistung bei einer Erhöhung/Verminderung der Anzahl individueller Kanäle um eine mittlere Sendeleistung der individuellen Kanäle erhöht/vermindert wird.

15. Verfahren nach einem der Ansprüche 9 bis 14, **dadurch gekennzeichnet, dass** der Sendeleistungsregelungsschritt in der Basisstation ausgeführt wird.

16. Verfahren nach einem der Ansprüche 9 bis 15, **dadurch gekennzeichnet, dass** das Mobilkommunikationssystem ferner eine Basisstationssteuerungsstation (7) zum Steuern der Basisstation aufweist, wobei das Verfahren ferner die Schritte aufweist:
Zuführen von Information für die Sendeleistungsregelung zur Basisstationssteuerungseinrichtung in der Basisstation;
Bereitstellen von Setzinformation über die Sendeleistung für den gemeinsamen Kanal basierend auf der der Basisstationssteuerungsstation zugeführten Information; und
Ausführen der Sendeleistungsregelung gemäß dieser in der Basisstation bereitgestellten Information.

17. Basisstation (1 bis 3) zum Setzen eines individuellen Kanals zu einer Mobilstation (8a bis 8e) und eines gemeinsamen Kanals, der mit anderen Mobilstationen gemeinsam genutzt wird, zum Übertragen von Daten von der Mobilstation, **dadurch gekennzeichnet, dass** sie aufweist:
eine Sendeleistungsregelungsvorrichtung (14) zum Regeln einer Summe von Sendeleistungen für Übertragungen von der Basisstation zu den Mobilstationen auf einen im wesentlichen konstanten Leistungswert;
**dadurch gekennzeichnet, dass**
die Sendeleistungsregelungsvorrichtung, wenn die Summe der Sendeleistungen größer ist als ein oberer Grenzwert, die Sendeleistung für den gemeinsamen Kanal um eine Differenz zwischen der Summe und dem oberen Grenzwert vermindert.

18. Basisstation (1 bis 3) zum Setzen eines individuellen Kanals zu einer Mobilstation (8a bis 8e) und eines gemeinsamen Kanals, der mit anderen Mobilstationen gemeinsam genutzt wird, zum Übertragen von Daten von der Mobilstation, **dadurch gekennzeichnet, dass** sie aufweist:
eine Sendeleistungsregelungsvorrichtung (14) zum Regeln einer Summe von Sendeleistungen für Übertragungen von der Basisstation zu den Mobilstationen auf einen im wesentlichen konstanten Leistungswert;
**dadurch gekennzeichnet, dass** die Sendeleistungsregelungsvorrichtung, wenn die Summe der Sendeleistungen kleiner ist als ein unterer Grenzwert, die Sendeleistung für den gemeinsamen Kanal um eine Differenz zwischen der Summe und dem unteren Grenzwert erhöht.

19. Basisstation nach Anspruch 17 oder 18, **dadurch gekennzeichnet, dass** die Sendeleistungsregelungsvorrichtung eine Summe der Sendeleistungen für den gemeinsamen Kanal und für die individuellen Kanäle bei dem konstanten Leistungswert hält.

20. Basisstation nach Anspruch 17, 18 oder 19, **dadurch gekennzeichnet, dass** die Sendeleistungsregelungsvorrichtung die Sendeleistung für den gemeinsamen Kanal auf den konstanten Leistungswert setzt, wenn kein individueller Kanal vorhanden ist.

21. Basisstation nach Anspruch 17, 18, 19 oder 20, **dadurch gekennzeichnet, dass** die Sendeleistungsregelungsvorrichtung die Sendeleistung für den gemeinsamen Kanal gemäß einer erhöhten/verminderten Sendeleistung, die durch eine Erhöhung/Verminderung der Anzahl der individuellen Kanäle verursacht wird, entsprechend erhöht/vermindert.

22. Basisstation nach Anspruch 21, **dadurch gekennzeichnet, dass** die Sendeleistungsregelungsvorrichtung die Sendeleistung für den gemeinsamen Kanal bei einer Erhöhung/Verminderung der Anzahl der individuellen Kanäle um eine mittlere Sendeleistung der individuellen Kanäle erhöht/vermindert.

23. Programm, das einen Computer veranlaßt, eine Verarbeitung für ein Sendeleistungsregelungsverfahren nach einem der Ansprüche 9 bis 14 auszuführen.

## Revendications

1. Système de communication mobile comprenant :
une station de base (1, 2, 3) ; et
une station mobile (8a - 8e) ayant un canal individuel établi à ladite station de base et un canal partagé établi à ladite station de base partagé avec d'autres stations mobiles pour transmettre des données à partir de ladite station de base ; et
un dispositif de commande de la puissance de transmission (14) pour commander une somme de puissances de transmission à partir de ladite station de base auxdites stations mobiles de façon approximativement constante,
**caractérisé en ce que** si la somme desdites puissances de transmission est plus grande qu'une limite supérieure, ledit dispositif de commande de la puissance de transmission diminue la puissance de transmission pour ledit canal partagé d'une différence entre ladite somme et ladite limite supérieure.

2. Système de communication mobile comprenant :
une station de base (1, 2, 3) ; et
une station mobile (8a - 8e) ayant un canal individuel établi à ladite station de base et un canal partagé établi à ladite station de base partagé avec d'autres stations mobiles pour transmettre des données à partir de ladite station de base ; et
un dispositif de commande de la puissance de transmission (14) destiné à commander une somme de puissances de transmission à partir de ladite station de base auxdites stations mobiles de façon approximativement constante,
**caractérisé en ce que** si la somme desdites puissances de transmission est inférieure à une limite inférieure, ledit dispositif de commande de la puissance de transmission augmente la puissance de transmission pour ledit canal partagé d'une différence entre ladite somme et ladite limite inférieure.

3. Système selon la revendication 1 ou 2, **caractérisé en ce que** ledit dispositif de commande de la puissance de transmission maintient une somme des puissances de transmission pour ledit canal partagé, et pour lesdits canaux individuels à ladite puissance constante.

4. Système selon la revendication 1, 2 ou 3, **caractérisé en ce que** ledit dispositif de commande de la puissance de transmission établit la puissance de transmission pour ledit canal partagé à ladite puissance constante lorsqu'il n'existe aucun canal individuel.

5. Système selon la revendication 1, 2, 3 ou 4, **caractérisé en ce que** ledit dispositif de commande de la puissance de transmission augmente / diminue respectivement la puissance de transmission pour ledit canal partagé selon une puissance de transmission accrue / diminuée en raison d'une augmentation / diminution desdits canaux individuels.

6. Système selon la revendication 5, **caractérisé en ce que** ledit dispositif de commande de la puissance de transmission augmente / diminue respectivement la puissance de transmission pour ledit canal partagé d'une puissance de transmission moyenne des canaux individuels pour une augmentation / diminution d'un canal individuel.

7. Système selon l'une quelconque des revendications 1 à 6, **caractérisé en ce que** ledit dispositif de commande de la puissance de transmission est prévu dans ladite station de base.

8. Système selon l'une quelconque des revendications 1 à 7, comprenant en outre une station de commande (7) de la station de base pour commander ladite station de base (1 à 3), dans lequel ladite station de base rapporte des informations pour ladite commande de la puissance de transmission à ladite station de commande de la station de base, et ladite station de commande de la station de base notifie l'établissement d'informations sur la puissance de transmission pour ledit canal partagé basé sur les informations rapportées.

9. Procédé de commande de la puissance de transmission pour une station de base d'un système de communication mobile comprenant une station de base (1 à 3), et une station mobile (8a à 8e) ayant un canal individuel établi à ladite station de base et un canal partagé établi à ladite station de base partagé avec d'autres stations mobiles pour transmettre des données à partir de ladite station de base,
ledit procédé comprenant une étape de commande de la puissance de transmission pour commander une somme de puissances de transmission à partir de ladite station de base auxdites stations mobiles de façon approximativement constante,
**caractérisé en ce que** si la somme desdites puissances de transmission est plus grande qu'une limite supérieure, ladite étape de commande de la puissance de transmission diminue la puissance de transmission pour ledit canal partagé d'une différence entre ladite somme et ladite limite supérieure.

10. Procédé de commande de la puissance de transmission pour une station de base d'un système de communication mobile comprenant une station de base (1 à 3), et une station mobile (8a à 8e) ayant un canal individuel établi à ladite station de base et un canal partagé établi à ladite station de base partagé avec d'autres stations mobiles pour transmettre des données à partir de ladite station de base,
ledit procédé comprenant une étape de commande de la puissance de transmission pour commander une somme de puissances de transmission à partir de ladite station de base auxdites stations mobiles de façon approximativement constante,
**caractérisé en ce que** si la somme desdites puissances de transmission est inférieure à une limite inférieure, ladite étape de commande de la puissance de transmission augmente la puissance de transmission pour ledit canal partagé d'une différence entre ladite somme et ladite limite inférieure.

11. Procédé selon la revendication 9 ou 10, **caractérisé en ce que** ladite étape de commande de la puissance de transmission maintient une somme de puissances de transmission pour ledit canal partagé, et pour lesdits canaux individuels à ladite puissance constante.

12. Procédé selon la revendication 9, 10 ou 11, **caractérisé en ce que** ladite étape de commande de la puissance de transmission établit la puissance de transmission pour ledit canal partagé à ladite puissance constante lorsqu'il n'existe aucun canal individuel.

13. Procédé selon la revendication 9, 10, 11 ou 12, **caractérisé en ce que** ladite étape de commande de la puissance de transmission augmente / diminue respectivement la puissance de transmission pour ledit canal partagé selon une puissance de transmission augmentée / diminuée en raison d'une augmentation / diminution desdits canaux individuels.

14. Procédé selon la revendication 13,
**caractérisé en ce que** ladite étape de commande de la puissance de transmission augmente / diminue respectivement la puissance de transmission pour ledit canal partagé d'une puissance de transmission moyenne des canaux individuels pour une augmentation / diminution d'un canal individuel.

15. Procédé selon l'une quelconque des revendications 9 à 14, **caractérisé en ce que** ladite étape de commande de la puissance de transmission est menée dans ladite station de base.

16. Procédé selon l'une quelconque des revendications 9 à 15, **caractérisé en ce que** le système de communication mobile comprend en outre une station de commande (7) de la station de base pour commander ladite station de base, ledit procédé comprenant en outre les étapes de :
rapport d'informations pour ladite commande de la puissance de transmission à ladite station de commande de la station de base dans ladite station de base ;
notification de l'établissement d'informations sur la puissance de transmission pour ledit canal partagé basé sur les informations rapportées dans ladite station de commande de la station de base ; et
conduite de ladite commande de la puissance de transmission selon ces informations notifiées dans ladite station de base.

17. Station de base (1 à 3) pour établir un canal individuel avec une station mobile (8a à 8e) et un canal partagé, partagé avec d'autres stations mobiles pour transmettre des données à partir de la station mobile, **caractérisée en ce qu'**elle comprend :
un dispositif de commande de la puissance de transmission (14) pour commander une somme desdites puissances de transmission auxdites stations mobiles de façon approximativement constante, **caractérisé en ce que** si la somme desdites puissances de transmission est plus importante qu'une limite supérieure, ledit dispositif de commande de la puissance de transmission diminue la puissance de transmission pour ledit canal partagé d'une différence entre ladite somme et ladite limite supérieure.

18. Station de base (1 à 3) pour établir un canal individuel avec une station mobile (8a à 8e) et un canal partagé, partagé avec d'autres stations mobiles pour transmettre des données à partir de la station mobile, **caractérisée en ce qu'**elle comprend :
un dispositif de commande de la puissance de transmission (14) pour commander une somme desdites puissances de transmission auxdites stations mobiles de façon approximativement constante, **caractérisé en ce que** si la somme desdites puissances de transmission est inférieure à une limite inférieure, ledit dispositif de commande de la puissance de transmission augmente la puissance de transmission pour ledit canal partagé d'une différence entre ladite somme et la limite inférieure.

19. Station de base selon la revendication 17 ou 18, **caractérisée en ce que** ledit dispositif de commande de la puissance de transmission maintient une somme des puissances de transmission pour ledit canal partagé, et pour lesdits canaux individuels à ladite puissance constante.

20. Station de base selon la revendication 17, 18 ou 19, **caractérisée en ce que** ledit dispositif de commande de la puissance de transmission établit la puissance de transmission pour ledit canal partagé à ladite puissance constante lorsqu'il n'existe aucun canal individuel.

21. Station de base selon la revendication 17, 18, 19 ou 20, **caractérisée en ce que** ledit dispositif de commande de la puissance de transmission augmente / diminue respectïvement la puissance de transmission pour ledit canal partagé selon une puissance de transmission accrue / diminuée en raison d'une augmentation / diminution desdits canaux individuels.

22. Station de base selon la revendication 21, **caractérisée en ce que** ledit dispositif de commande de la puissance de transmission augmente / diminue respectivement la puissance de transmission pour ledit canal partagé d'une puissance de transmission moyenne des canaux individuels pour une augmentation / diminution d'un canal individuel.

23. Programme destiné à faire exécuter un processus par un ordinateur pour un procédé de commande de la puissance de transmission selon l'une quelconque des revendications 9 à 14.
